# EUROPEAN PATENT APPLICATION

(11) **EP 2 267 737 A2**
(43) Date of publication of application: **29.12.2010**
(21) Application number: 10004839.6
(22) Date of filing: 05.07.2005
(51) Int. Cl.: H01G 4/38, H01G 2/06, H01G 4/005, H01G 4/248

(54) **Electronic component comprising a RF component**

(30) Priority: 14.09.2004 US 940226
(62) Divisional of application: 05769004.2
(71) Applicant: American Technical Ceramics Corporation, Huntington Station NY 11746 (US)
(72) Inventor: Mruz, John, East Northport, NY 11731 (US)
(74) Representative: Schober, Mirko

(57) **Abstract**

An electronic component, comprising a RF component, preferably a multilayer capacitor, an inductor, a resistor, a filter, a transmission line or a plurality of transmission lines, and a pair of low-loss conductors, wherein each of said pair of low-loss conductors surrounds said RF component on four sides and is co-terminal with said RF component on a remaining two sides, preferably with a gap formed between said pair of low- loss conductors creating a low-loss capacitor.

## Description

### CROSS REFERENCE TO RELATED APPLICATIONS

The instant non-provisional application claims priority from provisional application number 60/503,183, filed September 15, 2003, and entitled ULTRA-WIDEBAND COUPLING CAPACITOR.

### BACKGROUND OF THE INVENTION

### Field of the Invention:

The present invention relates to an ultra-wideband coupling capacitor, and more particularly, the present invention relates to an orientation-insensitive ultra-wideband coupling capacitor and method of making.

### Description of the Prior Art:

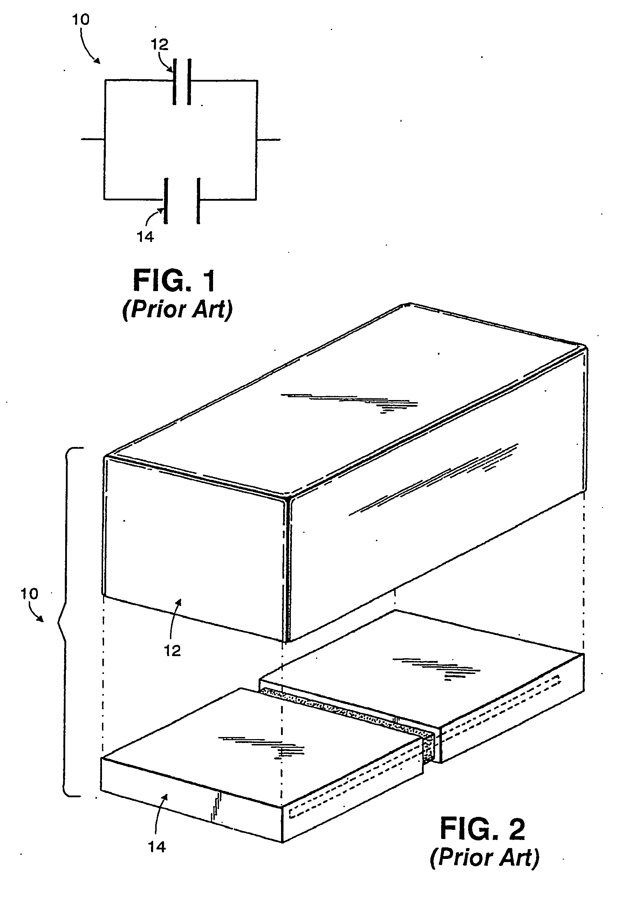

As shown in **FIGURES 1** and **2**, which are, respectively, a schematic diagram of a prior art ultra-wideband coupling capacitor, and an exploded diagrammatic perspective view of a prior art ultra-wideband coupling capacitor, a prior art ultra-wideband coupling capacitor **10** is a parallel combination of a high value capacitor **12,** typically 10 nanofarads or greater, and a low value capacitor **14,** typically 20 picofarads to 250 picofarads. As can be seen, capacitors in parallel result in wider operating bandwidths.

The prior art ultra-wideband coupling capacitor **10** is either composed of two or more physical items which require precise assembly or a single ceramic assembly which must internally include complex multiple capacitor configurations, and via holes that interconnect internal electrodes to external contacting pads. Both of these family of devices have larger than desired physical footprints and can only be mounted on one specific side of the device making them difficult to use where surface mount technology (SMT) is employed. Electrically, size limitations result in both high insertion and return losses and also cause excessive surface moding at higher microwave frequencies.

The high value capacitor **12** is a multi-layer capacitor, while the low value capacitor **14** is generally either a single layer capacitor or two single layer capacitors in a balanced configuration. The multi-layer capacitor is a multi-layer structure with interdigitated plates, each separated by a thin dielectric layer, while the single layer capacitor is a single layer structure with two plates separated by a thin dielectric layer.

The high value capacitor **12,** with its relatively low series resonance, is most effective on lower frequency signals, while the low value capacitor **14,** with its relatively high series resonance, is most effective on high frequency signals.

The high value capacitor **12** and the low value capacitor **14** of the prior art ultra-wideband coupling capacitor **10** have different operating characteristics in different portions of an ultra-wideband operating spectrum, as will be discussed *infra*.

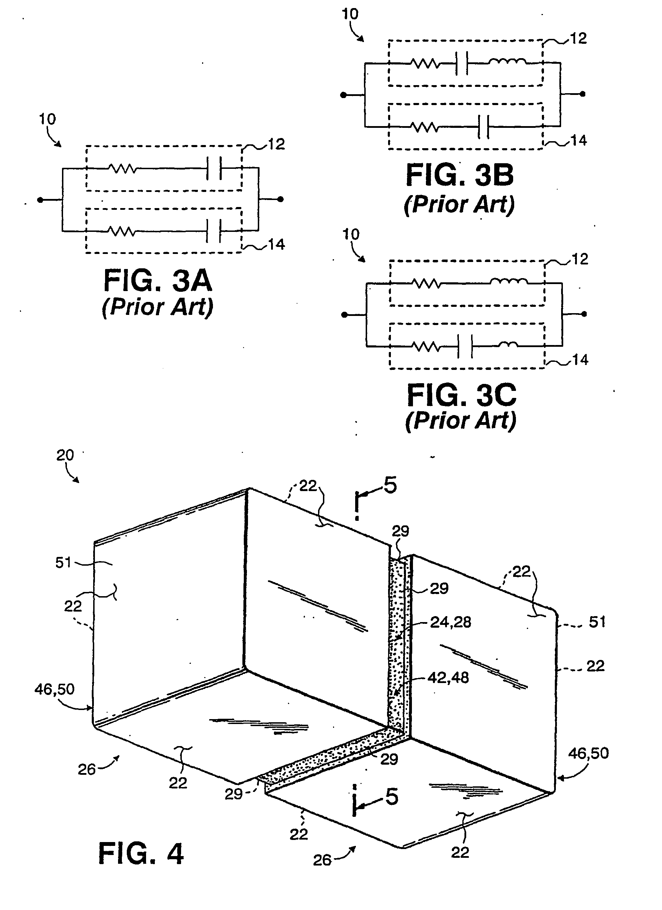

As shown in **FIGURE 3A****,** which is a schematic diagram of a prior art ultra-wideband coupling capacitor operating at a low frequency, when the prior art ultra-wideband coupling capacitor 10 is operating at a low frequency, the prior art ultra-wideband coupling capacitor 10 electrodes exhibit insignificant skin effect. The ceramic structure looks like a bulk dielectric.

As shown in **FIGURE 3B****,** which is a schematic diagram of a prior art ultra-wideband coupling capacitor operating at a mid frequency, when the prior art ultra-wideband coupling capacitor 10 is operating at a mid frequency, the prior art ultra-wideband coupling capacitor 10 electrodes exhibit significant skin effect. The dielectric region begins to take on the effect of a meandering parallel plate transmission line structure. Additional resonances emerge.

As shown in **FIGURE 3C****,** which is a schematic diagram of a prior art ultra-wideband coupling capacitor operating at a high frequency, when the prior art ultra-wideband coupling capacitor **10** is operating at a high frequency, the prior art ultra-wideband coupling capacitor **10** electrodes exhibit full skin effect. The dielectric region acts as a lossy meandering parallel plate transmission line. Additional resonances emerge at the higher frequencies.

The prior art ultra-wideband coupling capacitor **10** has a few associated shortcomings. Firstly, since the prior art ultra-wideband coupling capacitor **10** is a two-piece structure, the prior art ultra-wideband coupling capacitor **10** requires additional production assembly effort, which increases per unit cost. Secondly, the prior art ultra-wideband coupling capacitor **10** is orientation-sensitive restricting it to being mounted only on one specific surface, creating surface mount technology (SMT) compatibility issues. Thirdly, the assembly height of the prior art ultra-wideband coupling capacitor **10** exceeds the 0.020" dimension of a standard 0402 package by 0.012".

Thus, there exists a need for an ultra-wideband coupling capacitor which is one-piece and thereby eliminates additional production assembly effort which thereby decreases per unit cost, which is orientation-insensitive and thereby eliminates restricting it to being mounted only on one specific surface which thereby eliminates surface mount technology (SMT) compatibility issues, and which does not exceed the 0.020" dimension of a standard 0402.

Numerous innovations for high frequency capacitors have been provided in the prior art. Even though these innovations may be suitable for the specific individual purposes to which they address, they each differ in structure and/or operation and/or purpose from the present invention in that they do not present an ultra-wideband coupling capacitor which is one-piece and thereby eliminates additional production assembly effort which thereby decreases per unit cost, which is orientation-insensitive and thereby eliminates restricting it to being mounted only on one specific surface which thereby eliminates surface mount technology (SMT) compatibility issues, and which does not exceed the 0.020" dimension of a standard 0402.

**FOR EXAMPLE,** U.S. Patent Number 5,576,926 to Monsorno has an assignee common with the instant application and presents a capacitor which has a superior ability to operate in the upper regions of the RF spectrum. The capacitor includes a planar electrode layer which is mounted between a pair of dielectric layers. The electrode layer generally is centered inwardly with respect to the dielectric layers leaving an outward margin of dielectric material. One of the dielectric layers has two spaced apart contact members, each having a different polarity from the other. The electrode layer is isolated from electrical contact with any conductor and is buried within the dielectric layers. The electrode layer, in combination with the dielectric layer on which the contact members are mounted and the contact members, allow development of a selected value of capacitance between the contact members. Providing trimmed contact members, as well as controlling their size and spacing, allow for convenient preselection of desired operative characteristics of the capacitor. The contact members could be positioned on a substrate to which a buried electrode is mounted.

**ANOTHEREXAMPLE**, U.S. PatentNumber 6,690,572 to Liebowitz teaches an SLC which has a thin brittle ceramic dielectric layer less than 0.0035 inches thick and as low as 0.0005 inches or less. Electrodes are thick and strong enough, either singly or together, to give the structure required physical strength for manufacture, handling, and usage. Electrodes are (1) a ceramic metal composite, (2) a porous ceramic infiltrated with metal or other conductive material, (3) a resin filled with metal or other conductive material, or (4) combinations of the above. The very thin and, in itself, fragile dielectric layer provides exceedingly high capacity per unit area with temperature stability and low losses. A 0.00001-inch thick dielectric of titanium dioxide is also used.

It is apparent that numerous innovations for high frequency capacitors have been provided in the prior art that are adapted to be used. Furthermore, even though these innovations may be suitable for the specific individual purposes to which they address, they would not be suitable for the purposes of the present invention as heretofore described, namely, an ultra-wideband coupling capacitor which is one-piece and thereby eliminates additional production assembly effort which thereby decreases per unit cost, which is orientation-insensitive and thereby eliminates restricting it to being mounted only on one specific surface which thereby eliminates surface mount technology (SMT) compatibility issues, and which does not exceed the 0.020" dimension of a standard 0402.

### SUMMARY OF THE INVENTION

**ACCORDINGLY, AN OBJECT** of the present invention is to provide an orientation-insensitive ultra-wideband coupling capacitor that avoids the disadvantages of the prior art.

**ANOTHER OBJECT** of the present invention is to provide an orientation-insensitive ultra-wideband coupling capacitor which has improved electrical performance over that of the prior art.

**STILL ANOTHER OBJECT** of the present invention is to provide an orientation-insensitive ultra-wideband coupling capacitor which has more attractive physical/mechanical characteristics than that of the prior art

**YET ANOTHER OBJECT** of the present invention is to provide an orientation-insensitive ultra-wideband coupling capacitor which is one-piece and thereby has inherently higher reliability and eliminates additional production assembly effort which thereby decreases per unit cost.

**STILL YET ANOTHER OBJECT** of the present invention is to provide an orientation-insensitive ultra-wideband coupling capacitor which is smaller than a two-piece prior art ultra-wideband coupling capacitor and thereby consumes less space and reduces the propensity to launch surface modes.

**YET STILL ANOTHER OBJECT** of the present invention is to provide an orientation-insensitive ultra-wideband coupling capacitor which is orientation-insensitive and thereby eliminates restricting it to being mounted only on one specific surface which thereby eliminates surface mount technology (SMT) compatibility issues, *i*.*e*., operates equally well regardless of the surface used to mount it.

**STILL YET ANOTHER OBJECT** of the present invention is to provide an orientation-insensitive ultra-wideband coupling capacitor which does not require special orientation during tape-and-reel loading.

**YET STILL ANOTHER OBJECT** of the present invention is to provide an orientation-insensitive ultra-wideband coupling capacitor which does not exceed the 0.020" dimension of a standard 0402 so as to form a true 0402 package which can be handled with standard SMT equipment.

**STILL YET ANOTHER OBJECT** of the present invention is to provide an orientation-insensitive ultra-wideband coupling capacitor which is electrically identical to a two-piece prior art ultra-wideband coupling capacitor.

**YET STILL ANOTHER OBJECT** of the present invention is to provide an orientation-insensitive ultra-wideband coupling capacitor which has lower insertion loss than a two-piece prior art ultra-wideband coupling capacitor.

**STILL YET ANOTHER OBJECT** of the present invention is to provide an orientation-insensitive ultra-wideband coupling capacitor which has better VS WR than a two-piece prior art ultra-wideband coupling capacitor.

**YET STILL ANOTHER OBJECT** of the present invention is to provide a volumetrically efficient means for enclosing a functional RF component within a gapped low-loss conductor pair, each of which surrounds the RF component on four sides and is co-terminal with it on a remaining two sides.

**BRIEFLY STATED, STILL YET ANOTHER OBJECT** of the present invention is to provide an orientation-insensitive ultra-wideband coupling capacitor. The orientation-insensitive ultra-wideband coupling capacitor includes a plurality of external surfaces, a low frequency portion, and a high frequency portion. The high frequency portion is so disposed on, and electrically connected to, the low frequency portion so as to allow the orientation-insensitive ultra-wideband coupling capacitor to work identically when mounted on any external longitudinal surface of the plurality of external surfaces thereof and thereby be readily SMT compatible without regard to special orienting procedures.

The novel features which are considered characteristic of the present invention are set forth in the appended claims. The invention itself, however, both as to its construction and its method of operation together with additional objects and advantages thereof will be best understood from the following description when read and understood in connection with the accompanying drawings.

### BRIEF DESCRIPTION OF THE DRAWINGS

The figures of the drawings are briefly described as follows:
- **FIGURE 1**: is a schematic diagram of a prior art ultra-wideband coupling capacitor;
- **FIGURE 2**: is an exploded diagrammatic perspective view of a prior art ultra- wideband coupling capacitor;
- **FIGURE 3A**: is a schematic diagram of a prior art ultra-wideband coupling capacitor operating at a low frequency;
- **FIGURE 3B**: is a schematic diagram of a prior art ultra-wideband coupling capacitor operating at a mid frequency;
- **FIGURE 3C**: is a schematic diagram of a prior art ultra-wideband coupling capacitor operating at a high frequency;
- **FIGURE 4**: is a diagrammatic perspective view of the orientation-insensitive ultra- wideband coupling capacitor of the present invention;
- **FIGURE 5**: is a diagrammatic cross sectional view taken along **LINE 5-5** in **FIGURE 4****;**
- **FIGURE 6**: is a circuit equivalent to the orientation-insensitive ultra-wideband coupling capacitor of the present invention; and
- **FIGURES 7A-7D**: are a flow chart of the method of making the orientation-insensitive ultra-wideband coupling capacitor of the present invention.

### LIST OF REFERENCE NUMERALS UTILIZED IN THE DRAWINGS

### Prior Art

- **10**: prior art ultra-wideband coupling capacitor
- **12**: high value capacitor of prior art ultra-wideband coupling capacitor **10**
- **14**: low value capacitor of prior art ultra-wideband coupling capacitor **10**

### Present Invention

- **20**: orientation-insensitive ultra-wideband coupling capacitor of present invention
- **22**: plurality of external surfaces
- **24**: low frequency portion
- **26**: high frequency portion
- **28**: unterminated multi-layer capacitor of low frequency portion **24**
- **29**: external surfaces of unterminated multi-layer capacitor **28** of low frequency portion **24**
- **30**: electrode layers of unterminated multi-layer capacitor **28** of low frequency portion **24**
- **32**: dielectric layers of unterminated multi-layer capacitor **28** of low frequency portion **24**
- **34**: first ends of electrode layers **30** of unterminated multi-layer capacitor **28** of low frequency portion **24**
- **36**: opposing ends of external surfaces **29** of unterminated multi-layer capacitor **28** of low frequency portion **24**
- **38**: second ends of electrode layers **30** of unterminated multi-layer capacitor **28** of low frequency portion **24**
- **40**: pair of conductors of high frequency portion **26**
- **42**: circumferential slot between pair of conductors **40** of high frequency portion **26**
- **46**: exposed opposing ends of plurality of external surfaces **22** of orientation-insensitive ultra-wideband coupling capacitor **20**
- **48**: quick curing protective UV-curable solder dam coating
- **50**: plating
- **51**: solderable connections
- **52**: adhesion layer
- **54**: opposing ends of adhesion layer **52**
- **56**: slotted body

### DETAILED DESCRIPTION OF THE INVENTION

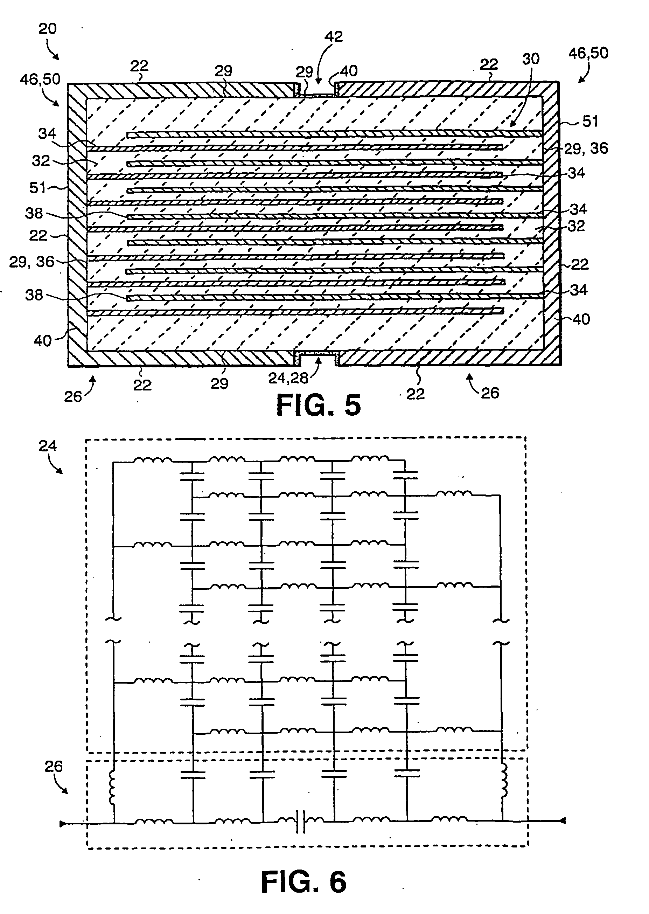

Referring now to the figures, in which like numerals indicate like parts, and particularly to **FIGURES 4** and **5****,** which are, respectively, a diagrammatic perspective view of the orientation-insensitive ultra-wideband coupling capacitor of the present invention, and a diagrammatic cross sectional view taken along **LINE 5-5** in **FIGURE 4****,** the orientation-insensitive ultra-wideband coupling capacitor of the present invention is shown generally at **20.**

The orientation-insensitive ultra-wideband coupling capacitor **20** typically operates in a range from below 20 KHz to over 40 Ghz, and fills a need for better blocking and decoupling components by finding a use in almost all ultra-wideband digital signal processing applications, *e*.*g*., optical systems and their associated test equipment, closely related DC returns and bias tees, fiber to the home (FTTH), and MMIC development, *e*.*g*., amplifiers, *e*.*g*, ultra-wideband MMIC amplifiers and those using related technology.

The orientation-insensitive ultra-wideband coupling capacitor **20** comprises a plurality of external surfaces **22,** a low frequency portion **24,** and a high frequency portion **26.** The high frequency portion **26** is so disposed on, and electrically connected to, the low frequency portion **24** so as to allow the orientation-insensitive ultra-wideband coupling capacitor **20** to work identically when mounted on any external longitudinal surface of the plurality of external surfaces **22** thereof and thereby be readily SMT compatible without regard to special orienting procedures.

The orientation-insensitive ultra-wideband coupling capacitor **12** can operate below 16 KHz by using a larger value for the low frequency portion **24** than that used for the range from below 20 KHz to over 40 Ghz, discussed *supra*.

The low frequency portion **24** is functionally equivalent to the high value capacitor **12** of the prior art ultra-wideband coupling capacitor **10,** *e*.*g*., a multi-layer capacitor, while the high frequency portion **26** is functionally equivalent to the low value capacitor **14** of the prior art ultra-wideband coupling capacitor **10,** *e*.*g*., a single-layer capacitor, so as to allow the orientation-insensitive ultra-wideband coupling capacitor **20** to have functions ofboth the high value capacitor **12** and the low value capacitor **14** solely in a single multi-layer ceramic body.

The low frequency portion **24** is an unterminated multi-layer capacitor **28** having external surfaces **29,** electrode layers **30,** and dielectric layers **32,** and preferably being 10 nF or higher. The dielectric layers **32** of the unterminated multi-layer capacitor **28** of the low frequency portion **24** alternate with the electrode layers **30** of the unterminated multi-layer capacitor **28** of the low frequency portion **24.** The electrode layers **30** of the unterminated multi-layer capacitor **28** of the low frequency portion **24** extend at first ends **34** thereof from, and are open for external electrical communication from, opposing ends **36** of the external surfaces **29** of the unterminated multi-layer capacitor **28** of the low frequency portion **24,** to second ends 38 thereof which alternatingly stop short of the opposing end **36** of the external surfaces **29** of the unterminated multi-layer capacitor **28** of the low frequency portion **24** opposite to that from which they extend so as not to be open for external electrical communication therefrom.

The high frequency portion **26** is a pair of conductors **40.** The pair of conductors **40** of the high frequency portion **26** cover the opposing ends **36** of the external surfaces **29** of the unterminated multi-layer capacitor **28** of the low frequency portion **24,** respectively, and extend therefrom over the external surfaces **29** of the unterminated multi-layer capacitor **28** of the low frequency portion **24,** to just short of each other so as to form a circumferential slot **42** therebetween and be separate from each other. The circumferential slot **42** is preferably formed by laser scribing, but can be formed by either chemical etching, mechanical abrasing, or any similar procedure. Because the high frequency portion **26** does not employ additional internal electrodes with separating layers, *i.e*., does not employ a composite internal interdigital electrode array as a single floating electrode that is coupled to the pair of conductors **40** of the high frequency portion **26,** there is less insertion and return losses.

The pair of conductors **40** of the high frequency portion **26** form the plurality of external surfaces **22** and electrically communicate with the first ends **34** of the electrode layers **30** of the unterminated multi-layer capacitor **28** of the low frequency portion **24** associated therewith so as to allow the orientation-insensitive ultra-wideband coupling capacitor **20** to work identically when mounted on any external longitudinal surface of the plurality of external surfaces **22** thereof. A set of coupled transmission lines is formed on the plurality of external surfaces **22** between the pair of conductors **40** of the high frequency portion **26** and the electrode layers **30** contained in the unterminated multi-layer capacitor **28** of the low frequency portion **24** so as to allow low frequency energy to pass through the low frequency portion **24,** which is centrally located, and to allow high frequency energy to pass through the high frequency portion **26,** which is peripherally located.

The pair of conductors **40** of the high frequency portion **26** preferably comprise titanium-tungsten (TiW) followed by nominally three microns of copper (Cu) and a gold (Au) flash.

The circumferential slot **42** is preferably nominally 1.5 mil wide, is constantly maintained completely through and completely around the high frequency portion **26** without destroying the unterminated multi-layer capacitor **28** of the low frequency portion **24,** and is disposed substantially midway between exposed opposing ends **46** of the plurality of external surfaces **22** of the orientation-insensitive ultra-wideband coupling capacitor **20,** thereby electrically separating the exposed opposing ends **46** of the orientation-insensitive ultra-wideband coupling capacitor **20** from each other restoring capacitance thereto.

The orientation-insensitive ultra-wideband coupling capacitor **20** further comprises a quick curing protective UV-curable solder dam coating **48.** The quick curing protective UV-curable solder dam coating **48** covers all surfaces defining the circumferential slot **42** to protect the circumferential slot **42.**

The orientation-insensitive ultra-wideband coupling capacitor **20** further comprises a plating **50.** The plating **50** covers the exposed opposing ends **46** of the plurality of external surfaces **22** of the orientation-insensitive ultra-wideband coupling capacitor **20** so as to form solderable connections **51** which extend up to the protective UV-curable solder dam coating **48** which acts as a stop-off barrier for the solderable connections **51.** The orientation-insensitive ultra-wideband coupling capacitor **20** is thereby formed having a resistance across the solderable connections **51** increased so that it exceeds 100 MegOhms. The plating **50** is preferably either pure tin or solder or gold. When the plating 50 is gold, the solderable connections **51** can also be gold/ribbon bonded or epoxy bonded.

A circuit equivalent to the orientation-insensitive ultra-wideband coupling capacitor **20** can best be seen in **FIGURE 6****,** which is circuit equivalent to the orientation-insensitive ultra-wideband coupling capacitor of the present invention.

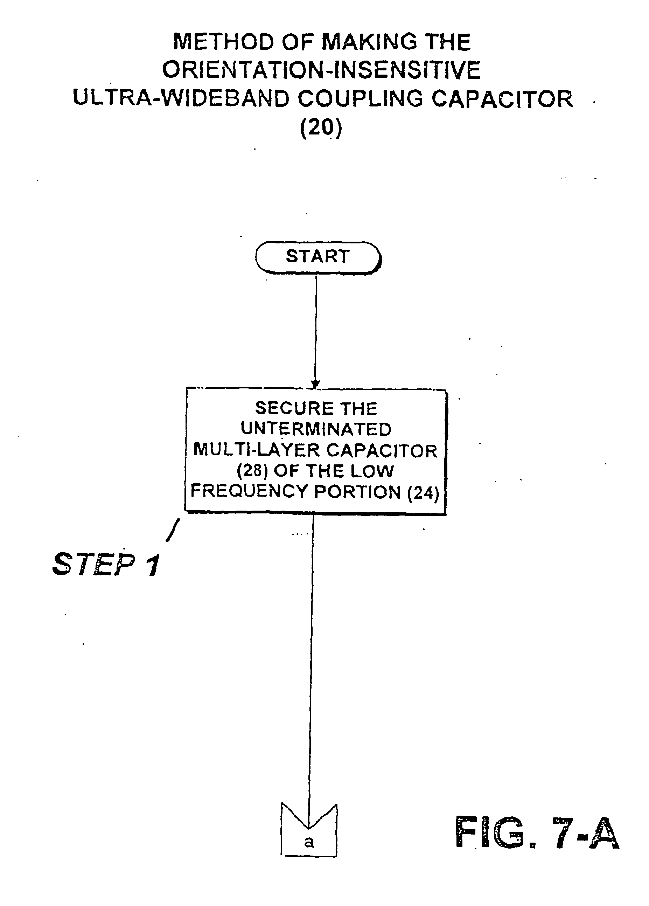

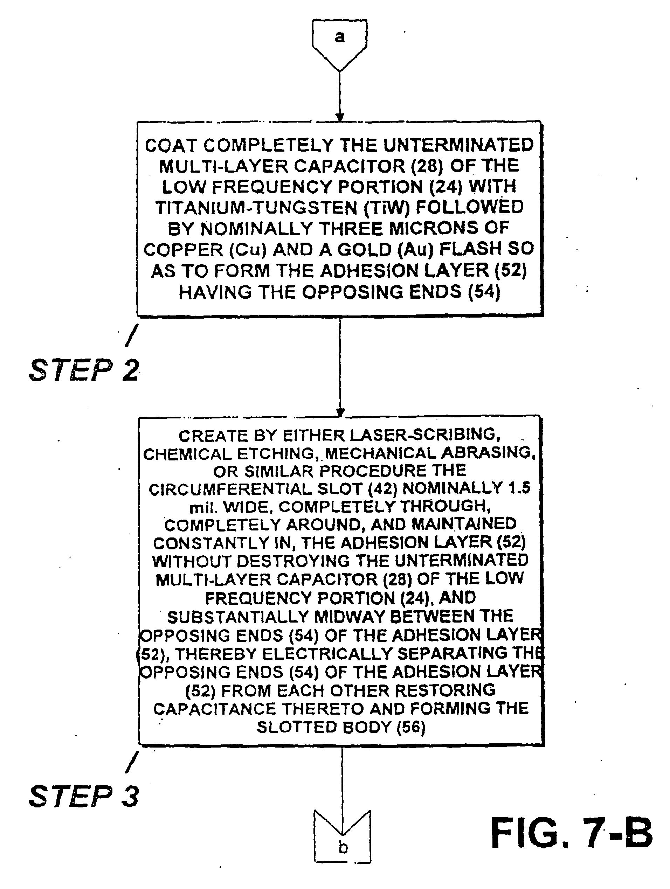

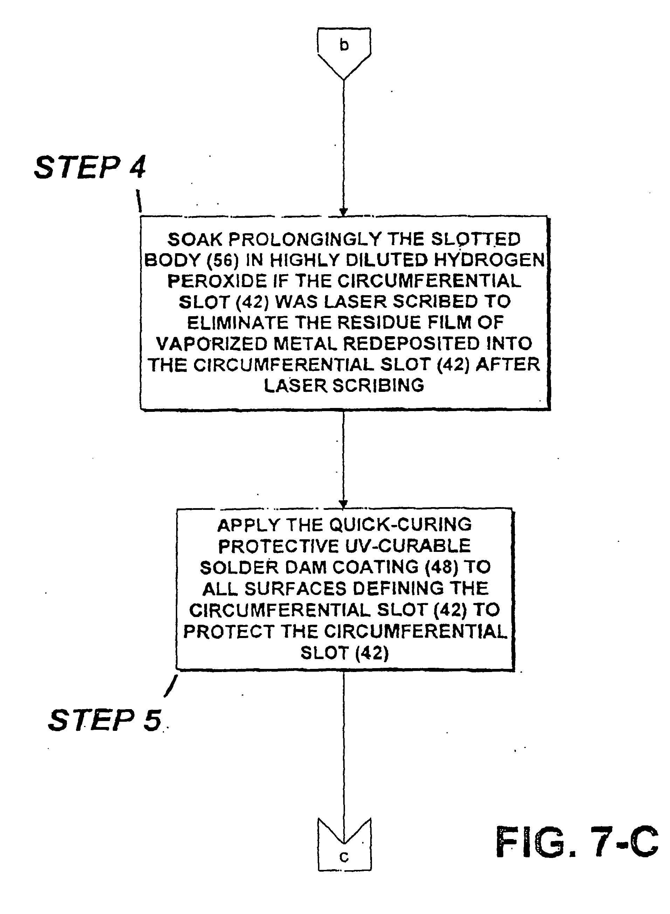

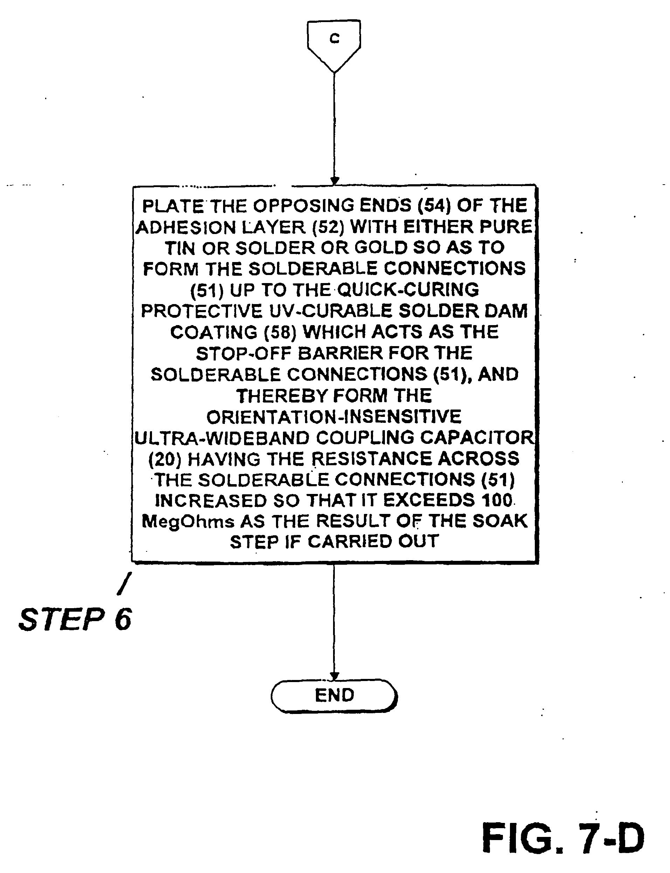

The method of making the orientation-insensitive ultra-wideband coupling capacitor **20** can best be seen in **FIGURES 7A-7D****,** which are a flow chart of the method of making the orientation-insensitive ultra-wideband coupling capacitor of the present invention, and as such, will be discussed with reference thereto.

The method of making the orientation-insensitive ultra-wideband coupling capacitor 20 comprises the following steps:
- ***STEP 1:***: Secure the unterminated multi-layer capacitor **28** of the low frequency portion **24.**
- ***STEP 2:***: Coat completely the unterminated multi-layer capacitor **28** of the low frequency portion **24** with titanium-tungsten (TiW) followed by nominally three microns of copper (Cu) and a gold (Au) flash so as to form an adhesion layer **52** having opposing ends **54.**
- ***STEP 3:***: Create by either laser scribing, chemical etching, mechanical abrasing, or similar procedure the circumferential slot **42** nominally 1.5 mil wide, completely through, completely around, and maintained constantly in, the adhesion layer **52** without destroying the unterminated multi-layer capacitor **28** of the low frequency portion **24,** and substantially midway between the opposing ends **54** of the adhesion layer **52,** thereby electrically separating the opposing ends **54** of the adhesion layer **52** from each other restoring capacitance thereto and forming a slotted body **56.**
- ***STEP 4:***: Soak prolongingly the slotted body **56** in highly diluted hydrogen peroxide if the circumferential slot **42** was laser scribed to eliminate a residue film of vaporized metal redeposited into the circumferential slot **42** after laser scribing.
- ***STEP 5:***: Apply the quick curing protective UV-curable solder dam coating **48** to all surfaces defining the circumferential slot **42** to protect the circumferential slot **42.**
- ***STEP 6:***: Plate the opposing ends **54** of the adhesion layer **52** with either pure tin or solder or gold so as to form solderable connections **51** up to the quick curing protective UV-curable solder dam coating **58** which acts as a stop-off barrier for the solderable connections **51,** and thereby form the orientation-insensitive ultra-wideband coupling capacitor **20** having a resistance across the solderable connections **51** increased so that it exceeds 100 MegOhms as a result of the soak step if carried out. The plating **50** is preferably either pure tin or solder or gold.

It is to be understood that even though the embodiment given is for a low frequency capacitor within a high frequency capacitor, it is not limited to that combination, in that generically an embodiment includes a volumetrically efficient means for enclosing a functional RF component within a gapped low-loss conductor pair. Each of the pair of low-loss conductors surrounds the RF component on four sides and is co-terminal with the RF component on a remaining two sides. A gap formed between the conductor pair creates a low-loss capacitor that is in parallel with the surrounded RF component. The surrounded RF component may include, but is not limited to, either a multilayer capacitor, an inductor, a resistor, other resonance circuitry, a filter, a transmission line, or a plurality of transmission lines. The resultant overall device includes, but is not limited to, volumetrically efficient high-performing parallel combinations of two capacitors, of an inductor and capacitor creating thereby a parallel-resonant network, a resistor, other resonance circuitry and a capacitor or a so-called R-C network, a filter and a capacitor creating thereby a filter with an additional pole or coupling, a transmission line and a capacitor, or a plurality of transmission lines and a capacitor.

It will be understood that each of the elements described above, or two or more together, may also find a useful application in other types of constructions differing from the types described above.

The invention has been illustrated and described as embodied in an orientation-insensitive ultra-wideband coupling capacitor and method ofmaking, however, it is not limited to the details shown, since it will be understood that various omissions, modifications, substitutions and changes in the forms and details of the device, materials employed and methods utilized, illustrated and its operation can be made by those skilled in the art according to knowledge in the art without departing from the spirit of the present invention.

Without further analysis, the foregoing will so fully reveal the gist of the present invention that others can, by applying current knowledge, readily adapt it for various applications without omitting features that, from the standpoint of prior art, fairly constitute characteristics of the generic or specific aspects of this invention.

## Claims

1. An electronic component, comprising: a) a RF component (30); and b) a pair of low-loss conductors (40); wherein each of said pair of low-loss conductors (40) surrounds said RF component (30) on four sides and is co-terminal with said RF component (30) on a remaining two sides.

2. The component as defined in claim 1, wherein a gap (42) formed between said pair of low- loss conductors (40) creates a low-loss capacitor; and wherein said low-loss capacitor is in parallel with said RF component (30) it surrounds.

3. The component as defined in claim 1, wherein said RF component (30) is one of a multilayer capacitor, an inductor, a resistor, a filter, a transmission line, and a plurality of transmission lines.

4. The component as defined in claim 1, wherein said RF component (30) and said pair of low-loss conductors (40) result in volumetrically efficient high-performing parallel combinations of one of two capacitors, an inductor and capacitor creating thereby a parallel-resonant network, a resistor and a capacitor, an R-C network, a filter and a capacitor creating thereby a filter with an additional pole or coupling, a transmission line and a capacitor, and a plurality of transmission lines and a capacitor.
